# EUROPÄISCHE PATENTANMELDUNG

(11) **EP 0 982 219 A2**
(43) Veröffentlichungstag der Anmeldung: **01.03.2000**
(21) Anmeldenummer: 99114751.3
(22) Anmeldetag: 28.07.1999
(51) Int. Cl.: B62D 1/12

(54) **Vorrichtung zum Lenken eines Kraftfahrzeuges mit wenigstens zwei Stellteilen**

(30) Priorität: 28.08.1998 DE 19839351
(71) Anmelder: DaimlerChrysler AG, 70567 Stuttgart (DE)
(72) Erfinder: Böhringer, Michael, 71334 Waiblingen (DE); Eckstein, Lutz, 70563 Stuttgart (DE)

(57) **Zusammenfassung**

Die Erfindung betrifft eine Vorrichtung zum Lenken eines Kraftfahrzeuges mit wenigstens zwei Stellteilen (10a,10b,10c).

Aufgabe der Erfindung ist es, bei aktiven Stellteilen (10a,10b,10c) zum Lenken eines Kraftfahrzeugs einerseits einen eindeutigen Zusammenhang zwischen dem tatsächlich erzeugten querdanamischen Verhalen (δ_{L,ist}) zu schaffen und andererseits den Eindruck einer mechanischen Kopplung der Stellteile (10a,10b,10c) untereinander zu ermitteln.

An wenigstens zwei Stellteilen (10a,10b,10c) kann der Fahrer den Sollwert (δ_{L,soll}) für das querdynamische Verhalten des Fahrzeugs vorgeben. Dabei wird der Sollwert (δ_{L,soll}) in Abhängigkeit der vom Fahrer aufgebrachten Betätigungskraft (F1,F2,F3) der Stellteile ermittelt. Über Stellorgane (12) wird der Sollwert (δ_{L,soll}) für das querdynamische Verhalten eingeregelt. Der durch die Stellorgane (12) erzeugte Istwert (δ_{L,ist}) für das querdynamische Verhalten wird ermittelt. Dem Istwert (δ_{L,ist}) wird eine Sollauslenkung (δ_{s,soll}) der Stellteile (10a,10b,10c) aus der Ruhelage heraus zugeordnet und an jedem Stellteil (10a,10b,10c) über eine ihm zugeordnete Stellteilregeleinrichtung (13) die ermittelte Sollauslenkung (δ_{s,soll}) des Stellteils (10a,10b,10c) eingeregelt.

## Beschreibung

Die Erfindung betrifft eine Vorrichtung zum Lenken eines Kraftfahrzeuges mit wenigstens 2 Stellteilen.

Dabei ist es zum Beispiel aus der DE 196 25 496 A1 bekannt, Fahrzeuge über Stellteile zu lenken, die selbst keine mechanische Verbindung mit den gelenkten Rädern aufweist. Der Fahrer gibt an einem solchen Stellteil zumindest den Sollwert für den Radlenkwinkel für die gelenkten Räder vor, wobei es auch möglich ist, über das gleiche Stellteil Sollwerte für weitere Stellgrößen, wie etwa Fahrzeuggeschwindigkeit und Fahrzeugverzögerung, vorzugeben. Dabei sind gemäß DE 195 25 496 A1 zwei oder mehrere Stellteile vorgesehen, über die der Fahrer den Sollwert für die Fahrtrichtung vorgeben kann, wobei die Stellteile untereinander mechanisch oder hydraulisch gekoppelt sind.

Beispielsweise aus der EP 0 591 890 A1 sind aktive Stellteile mit Kraftrückmeldung bekannt, bei denen über Stellteilregeleinrichtungen eine haptische Rückmeldung erzeugt wird, indem über ein Kennfeld eine der Auslenkung des Stellteils aus seiner Ruhelage heraus entgegenwirkende Kraft zugeordnet und erzeugt wird. Dabei kann zur Kopplung zwischen den Stellteilen an allen Stellteilen die gleiche entgegenwirkende Kraft erzeugt werden. Dadurch entsteht der Eindruck einer Kopplung zwischen den aktiven Stellteilen.

Bei den bekannten mechanischen oder hydraulischen Kopplungen ist es nachteilig, daß diese nicht bei sogenannten aktiven Stellteilen mit Winkelrückmeldung verwendet werden können. Die bekannte Kopplung aktiver Stellteile mit Kraftrückmeldung hat wiederum den Nachteil, daß es bei der Anwendung im Kraftfahrzeug nicht sichergestellt ist, daß die Stellteilauslenkung aus der Ruhelage in eindeutigem Zusammenhang zum tatsächlichen querdynamischen Fahrzeugzustand (z.B. dem erzeugten Lenkwinkel der gelenkten Räder) steht. Dies ist für den Fall der Rückmeldung des Lenkwinkels der Räder dann der Fall, wenn durch mechanische Einflüsse(Hindernisse) auf die Räder die radseitig angeordneten Stellorgane nicht in der Lage sind, den Sollenkwinkel tatsächlich einzuregeln.

Aufgabe der Erfindung ist es daher, bei aktiven Stellteilen zum Lenken eines Kraftfahrzeugs einerseits einen eindeutigen Zusammenhang zwischen dem tatsächlich erzeugten Radlenkwinkeln zu schaffen und andererseits den Eindruck einer mechanischen Kopplung der Stellteile untereinander zu ermitteln.

Diese Aufgabe wird durch eine Vorrichtung mit den Merkmalen des Anspruchs 1 gelöst. An wenigstens zwei Stellteilen kann der Fahrer die gewünschte Fahrzeugquerdynamik, z.B. den Sollenkwinkel für die gelenkten Räder vorgeben. Dabei wird der Sollwert für die Fahrzeugquerdynamik aus den auf die Stellteile einwirkenden Kräfte ermittelt. Dazu kann in an sich bekannter Weise, beispielsweise der Mittelwert oder die Summe der an den wenigstens zwei Stellteilen einwirkenden Kräfte gebildet werden und diesem Wert über ein Kennfeld ein Sollwert für die Fahrzeugquerdynamik zugeordnet werden. Über die den gelenkten Rädern zugeordnete Stellorgane wird der Sollwert für die Fahrzeugquerdynamik eingeregelt. Der durch die Stellorgane erzeugte tatsächliche Wert - Istwert - der Fahrzeugquerdynamik, beispielsweise der Radlenkwinkel gelenkter Räder - wird ermittelt. Dem querdynamischen Istverhalten wird eine Sollauslenkung der Stellteile aus der Ruhelage heraus zugeordnet und an jedem Stellteil über eine ihm zugeordnete Stellteilregeleinrichtung die ermittelte Sollauslenkung des Stellteils eingeregelt.

Die erfindungsgemäß Vorrichtung stellt sicher, daß der Fahrer den Eindruck gewinnt, die Stellteile seien untereinander mechanisch gekoppelt, wobei stets die vorgegebene Beziehung zwischen Auslenkung des Stellteils und der tatsächlichen Fahrzeugquerdynamik aufrechterhalten ist.

Weitere Ausgestaltungen der Erfindung sind in den Unteransprüchen dargestellt. Gemäß einer Ausgestaltung der Erfindung wird über das Stellteil ein Sollenkwinkel vorgegeben und über Stellorgane der Radlenkwinkel entsprechend der Vorgabe des Sollenkwinkels geregelt. Die Stellteilregeleinrichtung regelt dann die Auslenkung des Stellteils aufgrund des erfaßten Radlenkwinkels. Insbesondere vorteilhaft sind die Ausgestaltungen gemäß den Ansprüchen 3 und 4, wonach die Dauer der Regelzyklen von Stellteilregeleinrichtung und Stellorganen voneinander unabhängig sind. Um beim Fahrer eine ruckfreie, kontinuierliche Stellteilbewegung zu erreichen kann es vorteilhaft sein, an der Stellteilregeleinrichtung mit kürzeren Regelzyklen zu arbeiten, als an den Stellorganen. Dabei kann es zusätzlich von Vorteil sein, das ermittelte querdynamische Istverhalten für die Zwecke der Regelung der Stellteilbewegung zu filtern, damit kleine Regelabweichungen nicht zu dem Fahrer unangenehmem Verhalten des Stellteils führen.

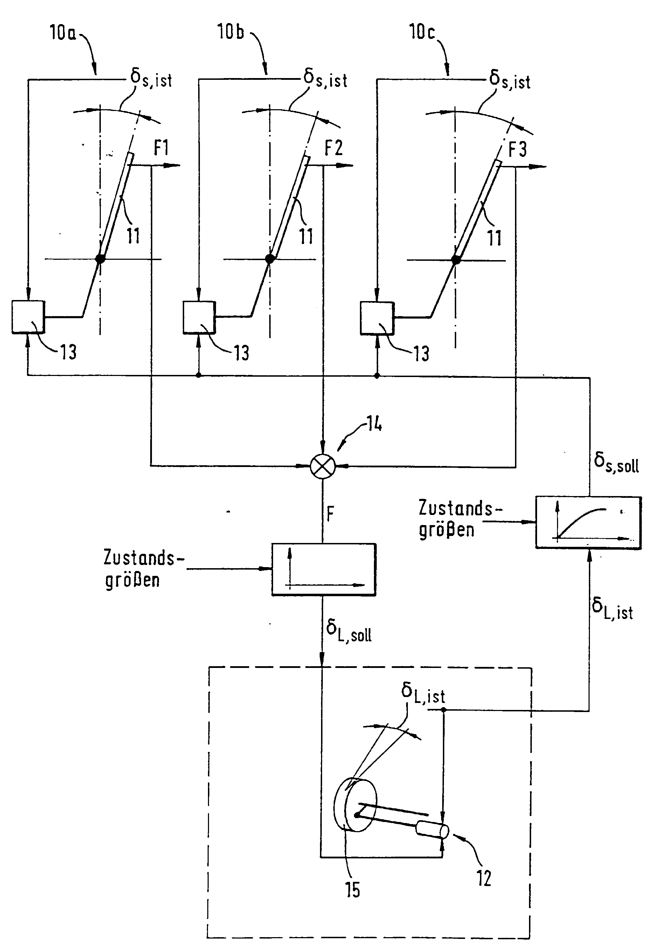

Die einzige Figur zeigt die schematische Darstellung einer erfindungsgemäßen Vorrichtung.

Die Vorrichtung weist die drei Stellteile 10a, 10b und 10c auf, die jeweils aus einem um-eine Achse verschwenkbaren Hebel 11 und einer Stellteilregeleinrichtung 13 gebildet werden. An jedem Stellteil wird die an ihm vom Fahrer aufgebrachte Betätigungskraft F1, F2 bzw. F3 ermittelt. Aus den ermittelten Werten wird in einem Verknüpfer 14 beispielsweise durch Mittelwertbildung ein einziger Betätigungskraftwert F ermittelt. Aus dieser Betätigungskraft wird - ggf. unter Berücksichtigung von Zustandsgrößen des Fahrzeugs, wie der Fahrzeuggeschwindigkeit, und ggf. auch der Zeit - der Sollenkwinkel δ_{L,soll} ermittelt und über die Stellorgane 12 an den gelenkten Rädern 15 eingeregelt. Der tatsächlich gegebene Radlenkwinkel δ_{L,ist} wird ermittelt und den Stellorganen 12 zur Bildung des Regelkreises zurückgeführt. Andererseits wird aus dem Radlenkwinkel δ_{L,ist} - ggf. unter Berücksichtigung von Zustandsgrößen des Fahrzeugs, wie der Fahrzeuggeschwindigkeit - die Sollauslenkung δ_{s,soll} der Hebel 11 ermittelt und der jeweiligen Stehlteilregeleinrichtung 13 zugeführt. Über die jeweilig Stellteilregeleinrichtung 13 wird an dem Hebel 11 des Stellteils die Auslenkung δ_{s,ist} des Hebels 11 aus seiner Ruhelage durch Schwenken um seine Achse erzeugt. Zum Schließen der Regelstrecke an dem jeweiligen Stellteil wird die tatsächliche Auslenkung δ_{s,ist} der jeweiligen Stellteilregelein-. richtung 13 zurückgeführt.

## Patentansprüche

1. Vorrichtung zum Lenken eines Kraftfahrzeuges
mit wenigstens zwei Stellteilen, über die der Fahrer zumindest einen Sollwert für das querdynamische Verhalten des Fahrzeugs vorgibt,
wobei die Vorgabe des Sollwertes durch Betätigen von wenigstens einem Stellteil im Sinne des Erzeugens einer Auslenkung des Stellteils aus seiner unbetätigten Ruhelage heraus erfolgt,
wobei mit Stellorgangen der Sollwert für das querdynamische Verhalten eingeregelt wird,
**dadurch gekennzeichnet**
daß
der Sollwert für das querdynamische Verhalten(δ_{L,soll}) aus den auf die Stellteile (10a, 10b, 10c) einwirkenden Kräfte (F1,F2,F3) ermittelt wird,
und daß das von den Stellorganen erzeugte Istwert (δ_{L,ist}) des querdynamischen Verhaltens ermittelt wird,
wobei aus dem Istwert des querdynamischen Verhaltens (δ_{L,ist}) eine Sollauslenkung (δ_{s,soll}) für die Stellteile (10a, 10b, 10c) ermittelt wird und wobei jedem Stellteil (10a, 10b, 10c) eine Stellteilregeleinrichtung (13) zugeordnet ist, wodurch die ermittelte Sollauslenkung (δ_{s,soll}) des Stellteils eingeregelt wird.

2. Vorrichtung nach Anspruch 1,
**dadurch gekennzeichnet**
das als Sollwert für das querdynamische Verhalten der Sollenkwinkel (δ_{L,soll}) und als Istwert des querdynamischen Verhaltens der Radlenkwinkel (δ_{L,ist}) verwendet wird, wobei auf gelenkte Räder Stellorgane zum Einregeln des Sollenkwinkels (δ_{L,soll}) einwirken.

3. Vorrichtung nach Anspruch 1,
**dadurch gekennzeichnet**
daß die Stellteile (10a, 10b, 10c) als jeweils um eine Schwenkachse herum verschwenkbare Hebel (11) ausgebildet sind und als Auslenkung des Stellteils aus seiner Ruhelage heraus der Drehwinkel (δ_{s,ist})des Hebels um seine Schwenkachse dient.

4. Vorrichtung nach Anspruch 1 oder 2,
**dadurch gekennzeichnet**,
daß die Dauer eines Regelzykluses für die Stellorgane und die Dauer eines Regelzykluses für die Stellteilregeleinrichtung voneinander verschieden sind.

5. Vorrichtung nach Anspruch 3,
**dadurch gekennzeichnet**
daß die Dauer eines Regelzykluses der Stellteilregeleinrichtung kleiner ist als die Dauer eines Regelzykluses für die Stellorgane.
